# EUROPÄISCHE PATENTANMELDUNG

(11) **EP 1 955 898 A1**
(43) Veröffentlichungstag der Anmeldung: **13.08.2008**
(21) Anmeldenummer: 07024180.7
(22) Anmeldetag: 13.12.2007
(51) Int. Cl.: B60R 7/06, B60K 37/04

(54) **In eine Instrumententafel eines Kraftfahrzeuges eingebautes Behältnis**

(30) Priorität: 08.02.2007 DE 102007006245
(71) Anmelder: GM Global Technology Operations, Inc., Detroit, MI 48265-3000 (US)
(72) Erfinder: Gaudig, Ralf, 65428 Rüsselsheim (DE); Roger, Martin, 86163 Augsburg (DE); Cleff, Marcus, 50678 Köln (DE); Laufenberg, Hans Joachim, 54629 Bergisch Gladbach (DE)
(74) Vertreter: Strauss, Peter

(57) **Zusammenfassung**

Die Erfindung betrifft ein in eine Instrumententafel eines Kraftfahrzeuges eingebautes Behältnis (8), mit einem Gehäuse (12) und einem schwenkbar im Gehäuse gelagerten Deckel (13) zum Verschließen des Gehäuses.
Erfindungsgemäß ist vorgesehen, dass das Gehäuse (12) schwenkbar in der Instrumententafel gelagert ist, sowie, dass das Gehäuse, bei mittels des Deckels verschlossenem Gehäuse, in einer ersten Stellung in die Instrumententafel eingeschwenkt ist und in einer zweiten Stellung des Gehäuses dieses aus der Instrumententafel ausgeschwenkt ist.

## Beschreibung

Die Erfindung betrifft ein in eine Instrumententafel eines Kraftfahrzeuges eingebautes Behältnis, mit einem Gehäuse und einem schwenkbar im Gehäuse gelagerten Deckel zum Verschließen des Gehäuses.

Derartige Behältnisse, vorzugsweise in Form von Ablagefächern, kommen insbesondere im Bereich der Instrumententafel bzw. Armaturentafel zum Einsatz. Das Behältnis ist in die Instrumententafel integriert und dient dort der Aufnahme von Utensilien. Zum Schutz dieser Utensilien, aber auch aus optischen Gründen, ist das Behältnis mit einem Deckel verschließbar.

Aus der DE 102 51 813 A1 ist ein in eine Instrumententafel eines Kraftfahrzeugs eingebautes Behältnis, mit einem Gehäuse und einem schwenkbar im Gehäuse gelagerten Deckel zum Verschließen des Gehäuses bekannt. Das Gehäuse ist stationär in der Instrumententafel gelagert und der Deckel relativ zum Gehäuse schwenkbar, zwischen einer Schließstellung und einer Offenstellung, so dass in letztgenannter Stellung des Deckels das Innere des Gehäuses zugänglich ist. Bei diesem Behältnis öffnet der verschließbare Deckel mittels einer push-push-Mechanik bei Betätigung der Mechanik selbsttätig. Eine solche push-push-Mechanik, die auch unter dem Begriff Tippmechanik bekannt ist, ist so konzipiert, dass sie bei einem Niederdrücken des geöffneten Deckels diesen in einer bestimmten Stellung verriegelt und bei einem weiteren Drücken entriegelt und danach federunterstützt in eine Offenstellung bringt.

Nachteilig ist bei der Anordnung des beschriebenen Behältnisses in der Instrumententafel, dass sich zwar der Deckel unkompliziert von dessen Öffnungsstellung in dessen Schließstellung und umgekehrt überführen lässt, aber das Innere des Gehäuses ergonomisch wenig günstig zugänglich ist. Dies gilt insbesondere dann, wenn das Behältnis in einem oberen, somit horizontal angeordneten Bereich der Instrumententafel in diese eingebaut ist. Die Verwendung einer push-push-Mechanik birgt die Gefahr, dass sich der Behälter bei größeren Erschütterungen von alleine öffnet.

Aus der DE 200 16 349 U1 ist gleichfalls ein in eine Instrumententafel eines Kraftfahrzeugs eingebautes Behältnis mit einem stationären Gehäuse und einem schwenkbar im Gehäuse gelagerten Deckel zum Verschließen des Deckels bekannt. Der Deckel stellt, insbesondere von seiner Sichtseite her gesehen, in Schließstellung, ein Element dar, das im Wesentlichen unauffällig an die angrenzenden Bereiche der Instrumententafel angepasst ist.

Aufgabe der vorliegenden Erfindung ist es, das in die Instrumententafel des Kraftfahrzeugs eingebaute Behältnis der Eingangs genannten Art so weiterzubilden, dass im Bereich der Instrumententafel zusätzlicher Stauraum geschaffen wird, der ergonomisch gut zugänglich ist.

Gelöst wird die Aufgabe bei einem in eine Instrumententafel eines Kraftfahrzeugs eingebauten Behältnis, mit einem Gehäuse und einem schwenkbar im Gehäuse gelagerten Deckel zum Verschließen des Gehäuses, dadurch, dass das Gehäuse schwenkbar gelagert ist, sowie das Gehäuse in einer ersten Stellung, bei mittels des Deckels verschlossenem Gehäuse, in die Instrumententafel eingeschwenkt ist und das Gehäuse in einer zweiten Stellung aus der Instrumententafel ausgeschwenkt ist.

Ein wesentliches Merkmal der Erfindung ist somit darin zu sehen, dass das Gehäuse schwenkbar gelagert ist. Das Gehäuse ist mittels des Deckels verschließbar. In der ersten Stellung des Gehäuses, bei mittels des Deckels verschlossenem Gehäuse, sind das Gehäuse und der Deckel in die Instrumententafel eingeschwenkt und es bildet damit der dem Gehäuse abgewandte Bereich des Deckels die sichtbare Fläche des Behältnisses, das in den entsprechenden Ausschnitt der Instrumententafel eingepasst ist, womit das Behältnis kein störendes Element im Bereich der Instrumententafel bildet.

Es wird in diesem Zusammenhang als besonders vorteilhaft angesehen, wenn das Gehäuse nicht unmittelbar, sondern nur mittelbar in der Instrumententafel schwenkbar gelagert ist. In diesem Fall ist das Gehäuse vorzugsweise schwenkbar in einer Aufnahme, insbesondere einer topfförmigen Aufnahme gelagert, wobei die Aufnahme in der Instrumententafel gelagert ist. Dies ermöglicht eine Vorfertigung der topfförmigen Aufnahme und des Behältnisses mit dem Gehäuse und dem Deckel zum Verschließen des Gehäuses sowie den weiteren bei dem Behältnis Verwendung findenden Bauteilen zur Gewährleistung der Funktionalität des Behältnisses. Es ist nur erforderlich, die Aufnahme in eine obere Ausnehmung der Instrumententafel einzustecken und mit der Instrumententafel zu verbinden.

Das Gehäuse ist in seiner ersten und/oder zweiten Stellung vorzugsweise bezüglich der Instrumententafel festgelegt. Insbesondere ist das Gehäuse in beiden Stellungen bezüglich der Instrumententafel festgelegt. Es sind Mittel zum Aufheben der Festlegung in der ersten und/oder zweiten Stellung vorgesehen, die insbesondere manuell betätigt werden. Die Festlegung erfolgt vorzugsweise durch Rastmittel oder Mittel, die aufgrund Reibschluss wirksam sind. Durch die Festlegung ist sicher gestellt, dass das Gehäuse nur dann aus der jeweiligen Stellung verfahren kann, wenn diese Verfahrbewegung wirklich gewünscht ist.

Das Überführen des Gehäuses von der ersten Stellung in die ausgefahrene zweite Stellung erfolgt insbesondere mittels einer unter Federvorspannung stehenden Kniehebelanordnung. Diese greift am Gehäuse an und schwenkt das Gehäuse aus. Es können selbstverständlich mehrere Federmittel vorgesehen sein, die insbesondere das Ausschwenken des Gehäuses aus der ersten Stellung während der ersten Winkelgrade unterstützen, bis eine relativ hohe Kniehebelkraft zur Verfügung steht.

Die Schwenkbewegung des Gehäuses, d.h. das Bewegen des Gehäuses aus der ersten Stellung in die ausgefahrene zweite Stellung, erfolgt vorzugsweise über einen Winkel von 90°, so dass der in der ersten Stellung das Gehäuse verschließende horizontale Deckel nunmehr, nach wie vor das Gehäuse verschließend, sich in einer vertikalen Stellung befindet. Zusätzlich vorgesehene Dämpfungselemente können die Bewegung des Gehäuses bei Erreichen der zweiten Stellung des Gehäuses dämpfen. Der Deckel ist vorzugsweise klemmend oder rastierend mit dem Gehäuse verbunden. Befindet sich das Gehäuse in seiner zweiten Stellung, erfolgt das Öffnen des Deckels vorzugsweise manuell. Es ist nur erforderlich, die Klemmung bzw. Rastierung aufzuheben und dann den Deckel relativ zum Gehäuse zu verschwenken.

Es wird in diesem Zusammenhang als bevorzugt angesehen, wenn die Schwenkachse von Deckel und Gehäuse parallel zur Schwenkachse von Gehäuse und Instrumententafel angeordnet ist oder mit dieser identisch ist. Fallen die Schwenkachsen nicht zusammen, so sind sie insbesondere benachbart angeordnet. In Folge der beschriebenen Anordnung der Schwenkachsen führt eine Schwenkbewegung des Deckels zum Überführen des Deckels von der geschlossenen vertikalen Stellung bei ausgefahrenem Gehäuse in die geöffnete Stellung des Deckels bei ausgefahrenem Gehäuse dazu, dass der Deckel um seine unten angeordnete Achse schwenkt, so dass er in seiner geöffneten Stellung im Wesentlichen horizontal orientiert ist. Demzufolge dient das geöffnete Gehäuse als Stauraum und es kann der geöffnete Deckel zusätzlich Gegenstände aufnehmen. Unter diesem Aspekt weist das Gehäuse beispielsweise mindestens eine Fachunterteilung auf, wobei die Fachunterteilung bei in zweiter Stellung befindlichem Gehäuse im Wesentlichen horizontal angeordnet ist. Durch die mindestens eine Fachunterteilung werden zwei abgetrennte Fächer im Gehäuse gebildet, die der Aufnahme von Utensilien dienen. Beispielsweise kann in einem der Fächer ein Brillenhalter positioniert werden. Der Deckel weist, bezogen auf seine Stellung bei geschlossenem Gehäuse, auf der dem Gehäuse zugewandten Seite einen zum Gehäuse hingerichteten Rand, insbesondere einen umlaufenden Rand auf. Bei ausgefahrenem Gehäuse und geöffnetem Deckel dient der Deckel somit gleichfalls der Aufnahme von Utensilien, die auf Grund des Deckelrandes, insbesondere des umlaufenden Deckelrandes, sicher vom Deckel aufgenommen werden, insbesondere bei auf die Utensilien einwirkenden Beschleunigungskräften beim Fahren.

Gemäß einer bevorzugten Ausführungsform der Erfindung ist vorgesehen, dass die Schwenkachse des Deckels, bezogen auf die zweite Stellung des Gehäuses, benachbart der Instrumententafel angeordnet ist.

Das Überführen des Behältnisses in seine in die Instrumententafel versenkte Stellung erfolgt, indem der leere Deckel auf das Gehäuse geklappt wird, dann die Festlegung des Gehäuses aufgehoben wird und anschließend durch Betätigen des Deckels von Hand, im Sinne einer in das Behältnis eingeleiteten Schwenkbewegung, das Gehäuse über den am Gehäuse anliegenden Deckel in die eingefahrene erste Stellung geschwenkt wird. In dieser wird das Gehäuse wieder verriegelt.

Nachfolgend wird ein Ausführungsbeispiel der Erfindung, ohne hierauf beschränkt zu sein, unter Bezugnahme auf die Zeichnung näher erläutert. In der Zeichnung zeigt:
- Figur 1: eine räumliche Ansicht eines mittleren Teilbereiches der Instrumententafel einer Personenkraftwagens mit dem in die Instrumententafel eingebauten Behältnis, in der in die Instrumententafel eingeschwenkten Stellung des Gehäuses,
- Figur 2: eine räumliche Ansicht von topfförmiger Aufnahme und von dieser aufgenommenem Behältnis, in der eingeschwenkten Stellung des Gehäuses, und überdies in der Position der topfförmigen Aufnahme gemäß der Einbauanordnung in die Instrumententafel nach Figur 1,
- Figur 3: die in Figur 2 gezeigte Funktionseinheit bei ausgeschwenktem Gehäuse, allerdings nach wie vor vom Deckel verschlossen,
- Figur 4: die in den Figuren 2 und 3 gezeigte Funktionseinheit bei ausgeschwenktem Gehäuse und in Öffnungsstellung befindlichem Deckel,
- Figur 5: einen Schnitt durch die in der Figur 2 veranschaulichten Funktionseinheit, im Bereich der Aktuatorik und der Rastierung für das Gehäuse geschnitten,
- Figur 6: einen Schnitt durch die Funktionseinheit nach der Figur 2, im Bereich des Gehäuses geschnitten,
- Figur 7: einen Schnitt entsprechend der Figur 6, allerdings für einen Zustand der Funktionseinheit bei teilweise ausgeschwenktem Gehäuse, das mittels des Deckels verschlossen ist.

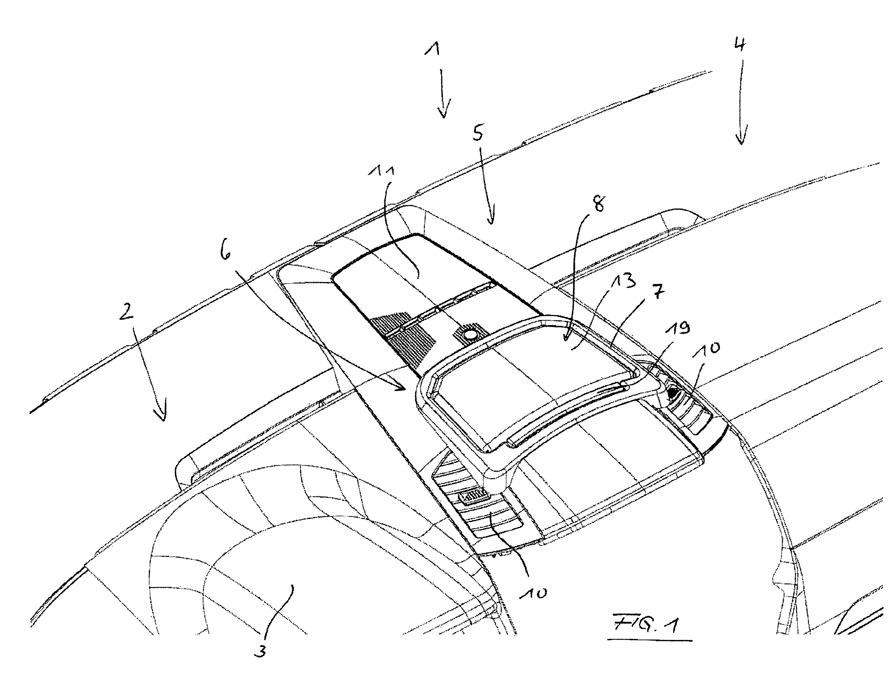

Figur 1 veranschaulicht die Instrumententafel 1 eines Personenkraftwagens in deren mittleren Bereich, und zwar im Bereich der Oberseite der Instrumententafel 1. Veranschaulicht ist der linke Bereich 2 der Instrumententafel 1 mit einer Blendabdeckung 3 für ein Kombiinstrument, ferner der rechte Bereich 4 der Instrumententafel 1, der sich vor dem Beifahrersitz befindet. Der ferner gezeigte mittlere Bereich 5 der Instrumententafel 1, der sich in der Verlängerung der Mittelkonsole des PKW befindet, weist die erfindungsgemäße Funktionseinheit 5 auf. Diese ist im Bereich der Oberseite der Instrumententafel 1 positioniert.

Die Funktionseinheit 6 besteht im Wesentlichen aus einem topfförmigen Gehäuse 7 und einem von diesem aufgenommenen Behältnis 8. Das topfförmige Gehäuse 7 ist in eine nicht veranschaulichte obere Aufnahme in der Instrumententafel 1 eingesteckt und mit der Instrumententafel 1 verbunden. Ein die Funktion eines Blendrahmens aufweisender umlaufender oberer Wulst 9 des topfförmigen Gehäuses 7 liegt an der Instrumententafel 1 an. Die Rastmittel zum rastierenden Verbinden des topfförmigen Gehäuses 7 mit der Instrumententafel 1 sind nicht mit veranschaulicht. Seitlich des topfförmigen Gehäuses 7 sind Lüftungsschlitze 10 oder andere Funktionseinheiten 11 in die Instrumententafel 1 eingebracht.

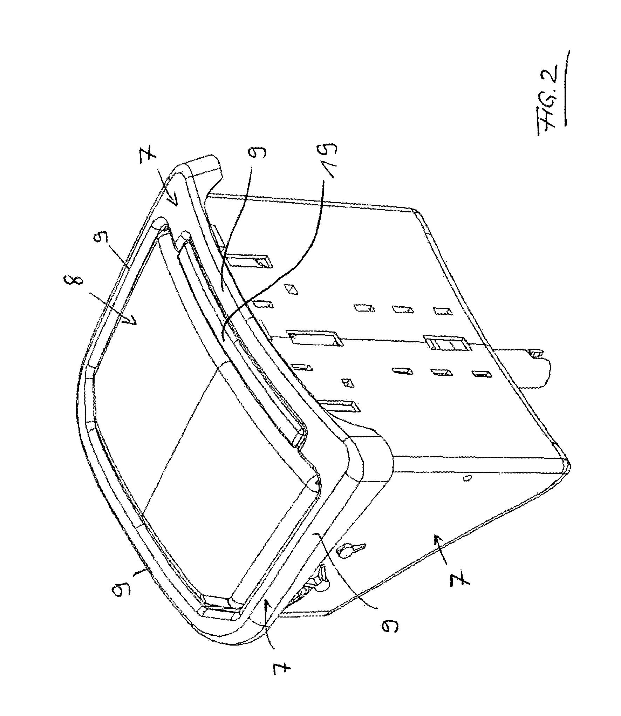

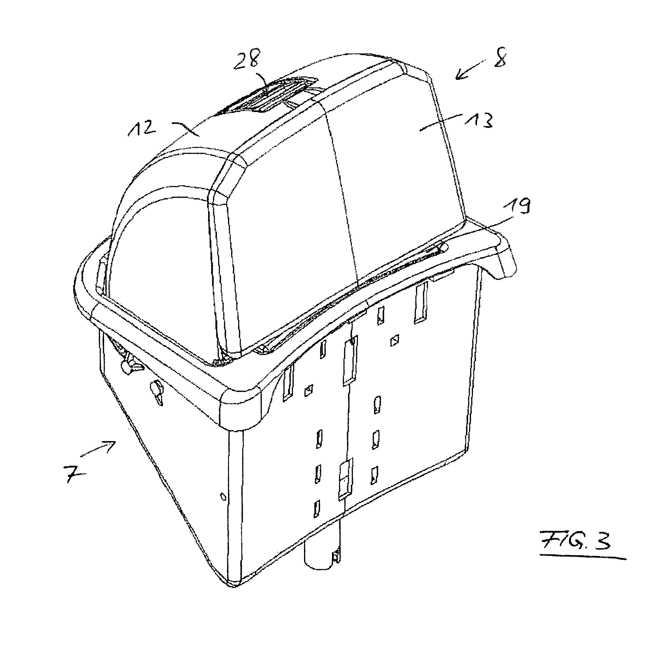

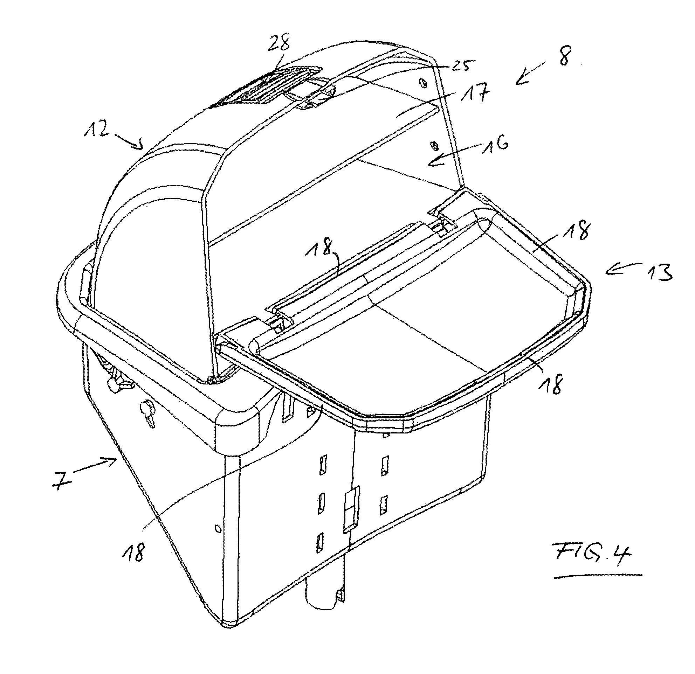

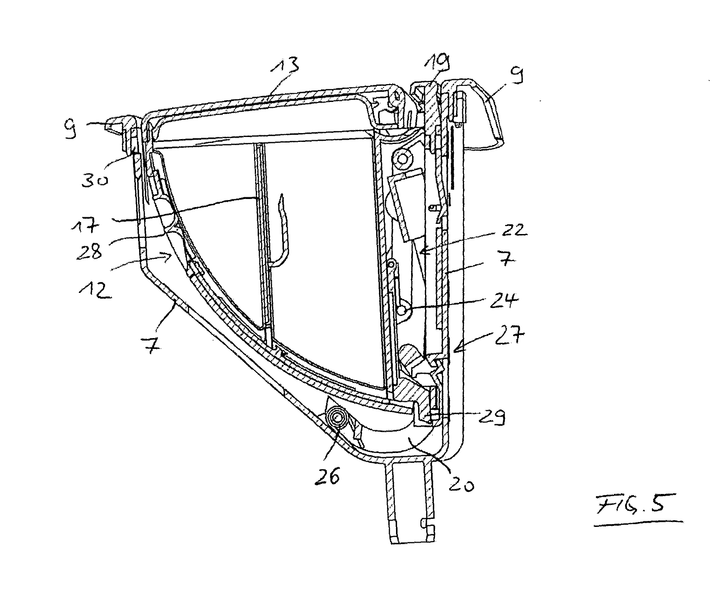

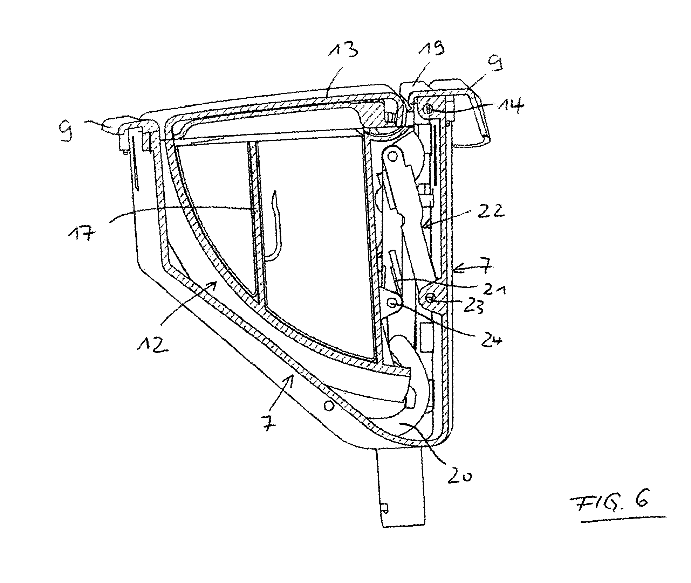

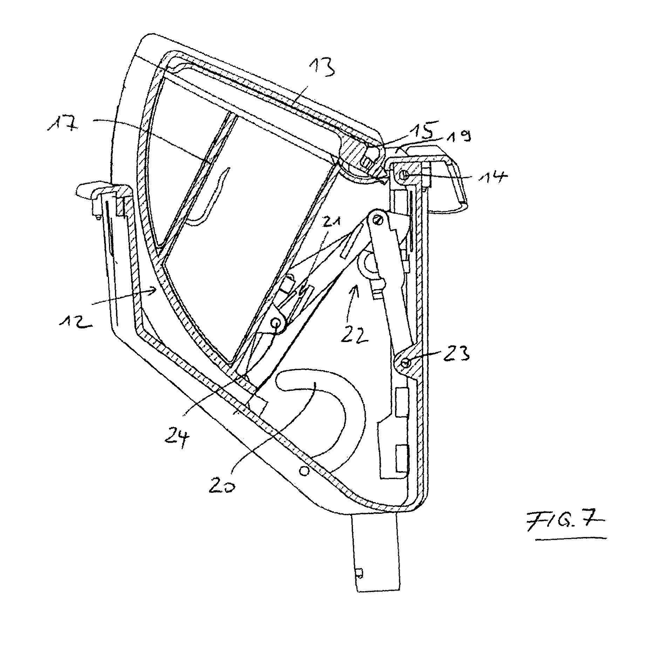

Bei der nachfolgenden Beschreibung wird auf die Figuren 2 bis 7 Bezug genommen:
Das vom Gehäuse 7 aufgenommene Behältnis 8 besteht aus einem Gehäuse 12 und einem Deckel 13 zum Verschließen des Gehäuses 12. Das Gehäuse 12 ist um eine Achse 14 schwenkbar im topfförmigen Gehäuse 7 gelagert, wobei diese Achse 14 horizontal und quer zur Längsrichtung des PKW angeordnet ist. Um diese Achse 14 kann das Gehäuse 12 aus der in den Figuren 1, 2, 5 und 6 gezeigten ersten Stellung, in der das mittels des Deckels 13 verschlossene Gehäuse 12 vollständig in das topfförmige Gehäuse 7 und damit vollständig in die Instrumententafel 1 eingeschwenkt ist, in eine zweiten Endstellung ausgeschwenkt werden, die in Figur 3 gezeigt ist. In dieser Stellung, bei der das Gehäuse 12 nach wie vor mittels des Deckels 13 verschlossen ist, ist das Gehäuse 12 um einen Winkel von etwa 90° geschwenkt worden und ist somit fast vollständig aus dem topfförmigen Gehäuse 7 und damit der Instrumententafel 1 ausgeschwenkt worden. Ausgehend von dieser Stellung gemäß Figur 3 kann dann der Deckel 13 relativ zum Gehäuse 12 weg geschwenkt werden, gleichfalls um einen Winkel von etwa 90°, so dass der Deckel 13 im Wesentlichen horizontal orientiert ist. Die Verschwenkung des Deckels 13 relativ zum Gehäuse 12 erfolgt hierbei um eine parallel und benachbart zur Achse 14 angeordnete Achse 15.
Wie insbesondere der Darstellung der Figur 4 zu entnehmen ist, weist der Innenraum 16 eine Fachunterteilung 17 auf, die den Innenraum 16 in zwei Innenraumbereiche trennt. Die Fachunterteilung ist in der in Figur 4 veranschaulichten, zweiten Stellung des Gehäuses 12 im Wesentlichen horizontal angeordnet. Der Figur ist ferner zu entnehmen, dass der aufgeklappte Deckel 13 aufgrund der Anordnung dessen Schwenkachse 15 benachbart der Instrumententafel 1 im Bereich des unteren Endes des in zweiter Stellung befindlichen Gehäuses 12 angeordnet ist. Der Deckel 13 weist, bezogen auf seine Stellung bei vom Deckel 13 geschlossenem Gehäuse 12, auf der dem Gehäuse 12 zugewandten Seite einen zum Gehäuse 12 hin gerichteten umlaufenden Rand 18 auf.
In der in das topfförmige Gehäuse 7 bzw. Instrumententafel 1 eingeschobenen, ersten Stellung des Gehäuses 12 ist dieses mit dem topfförmigen Gehäuse 7 rastiert. Rastierelemente sind mit der Bezugsziffer 27, eine Auslösetaste, die dem Lösen der Rastierelemente 27 dient, mit der Bezugsziffer 19 bezeichnet. Diese Auslösetaste 19 erstreckt sich in den oberen Bereich der Funktionseinheit 6, zwischen dem topfförmigen Gehäuse 7 und dem Deckel 13, benachbart der Achse 15 des Deckels 13. Somit ist diese Auslösetaste 19 sowohl durch den Fahrer als auch durch den Beifahrer gut erreichbar. Die Rastierung der Rastierelemente 27 wird durch Niederdrücken der Auslösetaste 19 entgegen der Wirkung einer Feder aufgehoben. Die konkrete Rastierelementanordnung, die die Rastierung des Gehäuses in seine eingeschobenen ersten Stellung wirkt, ist in den Figuren nicht sichtbar.
In der aus dem topfförmigen Gehäuse 7 ausgeschwenkten, zweiten Stellung des Gehäuses 12 greift eine Sperrklinke 29 der Rastierelementanordnung in eine benachbart dem umlaufenden Wulst 7 angeordnete Ausnehmung 30 ein. Gelöst wird die Rastierung in dieser zweiten Stellung des Gehäuses 12, indem eine im bogenförmigen Abschnitt des Gehäuses 12 verschieblich angeordnete Auslösetaste 28 manuell betätigt wird und hierbei, entgegen Federkraft, die Sperrklinke 29 der Rastierelementanordnung 27 zurückschiebt, so dass sie Außereingriff mit der Ausnehmung 30 gelangt. Eingeschwenkt wird das Gehäuse 12 in das topfförmige Gehäuse 7 entgegen der Kraft mehrerer Federn. Nur ein Teil dieser Federn ist in den Figuren dargestellt. Die Federkraft wird beispielsweise einerseits durch ein unter Einwirkung einer Feder 26 stehendes bogenförmiges Element 20, andererseits durch ein Federelement 21, das mit einem Kniehebel 22 zusammenwirkt, aufgebracht.
Der Kniehebel 22 ist mit einem Ende schwenkbar um eine Achse 23 im topfförmigen Gehäuse 7 gelagert, und zwar auf der Seite des Gehäuses 7, das den Fahrzeuginsassen zugewandt ist. Das andere Ende des Kniehebels 22 ist um eine Achse 24 schwenkbar im Gehäuse 12 gelagert. Bei in erster Stellung befindlichem Gehäuse 12 ist der Kniehebel 22 nahezu vollständig zusammengefaltet und steht sowohl unter der erhöhten Vorspannung des Federelements 21 als auch des Elements 20. Dieses Element 20 wird, wie der Darstellung der Figuren 7 und 6 zu entnehmen ist, nur beim Einschwenken des Gehäuses 12 in das topfförmige Gehäuse 7 während des letzten Drittels der Einschwenkbewegung vorgespannt. Es dient dem Unterstützen des Ausschwenkens des Gehäuses 12 in diesem Schwenkbereich.
Ausgehend von der ersten Stellung des Gehäuses wird durch Niederdrücken der Auslösetaste 19 die Rastierung aufgrund der Rastierelementanordnung 18 aufgehoben und das Gehäuse 12 unter Einwirkung der Federn, insbesondere des Elements 20 über den vorstehend erörterten Teilschwenkwinkel des Gehäuses 12 aus dem topfförmigen Gehäuse 7 ausgeschwenkt. Hierbei wird der Kniehebel 22 in dessen teilweise gestreckte Stellung überführt, womit die Kniehebelwirkung unter Berücksichtigung des Federelements 21 einsetzt und der Kniehebel 22 beim weiteren Ausschwenken seine maximale Ausschwenkkraft entwickelt. Das andere Element 20 ist zu diesem Zeitpunkt bereits wirkungslos. Der federbeaufschlagte Kniehebel 22 schwenkt das Gehäuse 12 weiter in seine in der Figur 3 gezeigte Endstellung - zweite Stellung - in der das Gehäuse 12 um einen Winkel von ungefähr 90° verschwenkt worden ist.
Bei in zweiter Stellung befindlichem Gehäuse 12 wird der Deckel 13 im Bereich seines seiner Achse 15 abgewandten Endes ergriffen und um etwa 90° um die Achse 15 geschwenkt, so dass sich die Funktionseinheit 6 in der in Figur 4 veranschaulichten Stellung befindet, in der sowohl das Innere des Gehäuses 12 zugänglich ist, als auch der aufgeklappte Deckel 13 als Ablage für Utensilien dienen kann.
Figur 4 ist besonders deutlich ein im Gehäuse 12 gelagertes Klemmelement 25 zu entnehmen, das unter Vorspannung den umlaufenden Rand 18 des Deckels 13 auf der der Achse 15 abgewandten Seite des Deckels 13 in der Schließstellung des Deckels 13 kontaktiert, so dass der Deckel 13 nur bei Aufbringen einer gewissen Kraft vom Gehäuse 12 weg geschwenkt werden kann.
Das Schließen des Gehäuses 12 mittels des Deckels 13 und das Einschwenken des Behältnisses 8 in das topfförmige Gehäuse 9 erfolgt bei umgekehrtem Bewegungsablauf der Funktionsteile der Funktionseinheit 6.

### Bezugszeichenliste

- Instrumententafel: 1
- Linker Bereich: 2
- Kombiinstrument: 3
- Rechter Bereich: 4
- Mittlerer Bereich: 5
- Funktionseinheit: 6
- Topfförmiges Gehäuse: 7
- Behältnis: 8
- Umlaufender Wulst: 9
- Lüftungsschlitz: 10
- Funktionseinheit: 11
- Gehäuse: 12
- Deckel: 13
- Achse: 14
- Achse: 15
- Innenraum: 16
- Fachunterteilung: 17
- Rand: 18
- Auslösetaste: 19
- Element: 20
- Federelement: 21
- Kniehebel: 22
- Achse: 23
- Achse: 24
- Klemmelement: 25
- Feder: 26
- Rastierelementanordnung: 27
- Auslösetaste: 28
- Sperrklinke: 29
- Ausnehmung: 30

## Patentansprüche

1. In eine Instrumententafel (1) eines Kraftfahrzeugs eingebautes Behältnis (8), mit einem Gehäuse (12) und einem schwenkbar im Gehäuse (12) gelagerten Deckel (13) zum Verschließen des Gehäuses (12), **dadurch gekennzeichnet, dass** das Gehäuse (12) schwenkbar gelagert ist, sowie das Gehäuse (12) in einer ersten Stellung, bei mittels des Deckels (13) verschlossenem Gehäuse (12), in die Instrumententafel (1) eingeschwenkt ist und das Gehäuse (12) in einer zweiten Stellung aus der Instrumententafel (1) ausgeschwenkt ist.

2. Behältnis nach Anspruch 1, **dadurch gekennzeichnet, dass** das Gehäuse (12) schwenkbar in einer Aufnahme (7), insbesondere einer topfförmigen Aufnahme (7) gelagert ist, wobei die Aufnahme (7) in der Instrumententafel (1) gelagert ist.

3. Behältnis nach Anspruch 1 oder 2, **dadurch gekennzeichnet, dass** die Aufnahme (7) in eine obere Ausnehmung der Instrumententafel (1) eingesteckt und mit der Instrumententafel (1) verbunden ist.

4. Behältnis nach einem der Ansprüche 1 bis 3, **dadurch gekennzeichnet, dass** die Schwenkachse (15) von Deckel (13) und Gehäuse (12) parallel zur Schwenkachse (14) von Gehäuse (12) und Instrumententafel (1) angeordnet ist, oder mit dieser identisch ist.

5. Behältnis nach einem der Ansprüche 1 bis 4, **dadurch gekennzeichnet, dass** das Behältnis (8) in einem horizontal angeordneten Bereich der Instrumententafel (1) in diese eingebaut ist.

6. Behältnis nach einem der Ansprüche 1 bis 5, **dadurch gekennzeichnet, dass** das Gehäuse (12) mindestens eine Fachunterteilung (17) aufweist, wobei die Fachunterteilung (17) bei in zweiter Stellung befindlichem Gehäuse (12) im Wesentlichen horizontal angeordnet ist.

7. Behältnis nach einem der Ansprüche 1 bis 6, **dadurch gekennzeichnet, dass** die Schwenkachse (15) des Deckels (13), bezogen auf die zweite Stellung des Gehäuses (12), benachbart der Instrumententafel (1) angeordnet ist.

8. Behältnis nach Anspruch 7, **dadurch gekennzeichnet, dass** der Deckel (13), bezogen auf seine Stellung bei geschlossenem Gehäuse (12), auf der dem Gehäuse (12) zugewandten Seite, einen zum Gehäuse (12) hin gerichteten Rand (18), insbesondere einen umlaufenden Rand (18) aufweist.

9. Behältnis nach einem der Ansprüche 1 bis 8, **dadurch gekennzeichnet, dass** der Deckel (13) in seiner das Gehäuse (12) verschließenden Stellung mit dem Deckel (13) mittels einer Klemmverbindung (25) oder einer Rastverbindung verbunden ist.

10. Behältnis nach einem der Ansprüche 1 bis 9, **dadurch gekennzeichnet, dass** das Gehäuse (12) in seiner ersten und/oder zweiten Stellung bezüglich der Instrumententafel (1) festgelegt ist.

11. Behältnis nach einem der Ansprüche 1 bis 10, **dadurch gekennzeichnet, dass** das Gehäuse (12) mittels einer unter Vorspannung mindestens eines Federelements (21) stehenden Kniehebelanordnung (22) ausschwenkbar ist.
